Europäisches Patentamt

European Patent Office

Office européen des brevets

(19)

(11) Publication number: **0 016 875**
**B1**

# (12) EUROPEAN PATENT SPECIFICATION

(45) Date of publication of patent specification: **11.04.84**

(51) Int. Cl.³: **B 60 B 33/00**

(21) Application number: **79200273.5**

(22) Date of filing: **05.06.79**

(54) **Castor wheel.**

(30) Priority: **13.06.78 SE 7806792**

(43) Date of publication of application:
**15.10.80 Bulletin 80/21**

(45) Publication of the grant of the patent:
**11.04.84 Bulletin 84/15**

(84) Designated Contracting States:
**BE DE FR IT NL**

(56) References cited:
**FR - A - 1 596 797**
**GB - A - 1 097 905**
**US - A - 1 879 429**
**US - A - 1 922 099**
**US - A - 1 953 636**
**US - A - 2 173 950**

(73) Proprietor: **Aktiebolaget SKF**
**Hornsgatan 1 Fack**
**S-415 50 Gothenburg (SE)**

(72) Inventor: **Hellström, Einar**
**Norra Barrgatan 19**
**S-552 59 Jönköping (SE)**

(74) Representative: **Merkelbach, B. et al,**
**SKF Engineering & Research Centre B.V. P.O. Box**
**50 Plettenburgerweg 6A**
**NL-3430 AB Nieuwegein (NL)**

Courier Press, Leamington Spa, England.

Castor wheel

The present invention refers to a castor wheel incorporating a forked journal which is rotatably supported in a bearing on a member intended to be attached to the device provided with the castor wheel, wherein said member has another external surface which is adapted for applying a torque onto the member, and which is provided with a threaded part non-rotatably connected to the member and intended to be screwed onto said device when mounting the castor wheel and wherein said forked journal comprises a hole for passing said threaded part through said member.

Such castor wheels are used in many different applications, e.g. on customer trolleys in stores and on other small transport carts or trolleys in industry, business and communication. The castor wheels are often exerted to large stresses and they therefore must have high strength and wear resistance. As they are often used in an aggressive environment it is necessary that the bearings forming part of the castor wheels are well sealed off. It is furthermore desirable that the castors are easily exchangeable, i.e. that they are easy to mount on and dismount from the vehicles whereon they are provided.

Hitherto known castor wheels such as disclosed in US patent 1.953.636 are generally attached to the base by means of an attachment plate and one or more attachment screws and/or nuts. The screws or the nuts are intended to be turned by means of a suitable tool and as they are generally difficult to access, mounting and dismounting are often complicated. This particularly concerns the bearing which consists of loose parts and being difficult to effectively seal off.

This primary purpose of the present invention is to provide a castor wheel which is stable and wear resistant, which can be mounted on and dismounted from the device provided therewith with simple aids and at which the bearings forming part of the castor wheel are well protected and sealed off. Thereto a castor wheel according to the invention is characterized in that said forked journal and said member each are connected with a race ring of a rolling bearing unit which unit at one end is sealed by means of an annular axial flange of said member which overlaps a portion of the forked journal the outer surface of said flange is provided with said other external surface, said unit at the other end is sealed by means of a cover which covers said hole for retaining the threaded part in the said member.

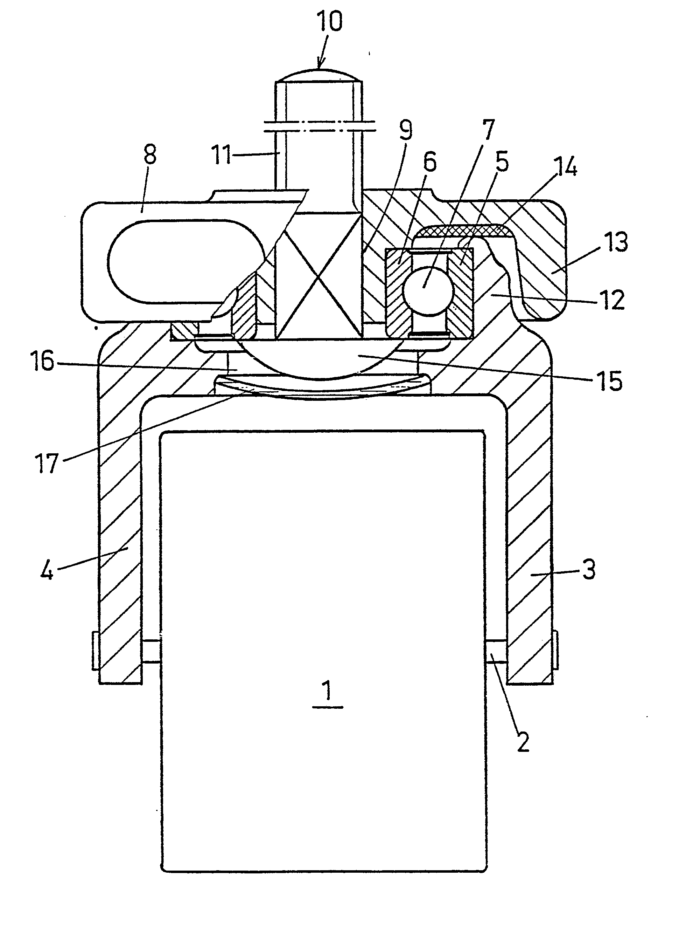

The invention will hereinafter be further described with reference to the accompanying drawing, which partly in section shows one embodiment of a castor wheel according to the invention.

A wheel 1 is supported on a shaft 2 in a forked journal having two arms 3, 4. At the inner end of the forked journal on the bearing seat of the journal there is mounted a rolling bearing having an outer race ring 5, an inner race ring 6 and rolling bodies 7 arranged therebetween. The forked journal is, by means of this bearing pivotably supported on a member 8, on which the bearing is mounted and which member is intended to be fixed against the device provided with the castor wheel. The bearing is prferably a deep groove ball bearing, which can take up radial as well as axial forces.

The number 8 has a central through bore 9. A screw 10 extends through the bore and also through the inner race ring of the bearing. The free end of the screw is provided with a thread 11. The screw and the member 8 are non-rotatably inter-connected preferably thereby that the bore 9 and the portion of the screw situated therein has non-circular cross-sections. At the mounting of the castor wheel the member 8 is screwed onto the device provided with the castor wheel with this screw, which either can be screwed into a threaded bore in the device or can be inserted through a bore in this and be provided with a nut on the rear side thereof. The member 8 has an outer contour, which is adapted for subjecting it to a torque. The member has preferably the form of a nut, which matches with an appropriate spanner. During the mounting of the castor wheel the member 8 and thereby also the screw 10 therefore can be easily turned for being screwed into a threaded bore and if a nut shall be fitted to the threaded portion 11 of the screw it is easy either to turn this nut or the member 8.

The bearing 5, 6, 7 and the portion 12 of the forked journal, provided with the seat for the bearing, are enclosed by the outer part of the member 8, which has the form of an annular axial flange 13. Said forked journal portion forms together with the flange a slot seal, which protects the bearing against penetration of impurities and also acts as a mechanical protection for the bearing. The sealing ability can be further improved if a particular sealing element 14 is provided in the slot.

A certain reduction of the play in the bearing 5, 6, 7 can be brought about if the bore 9 and the portion of the screw 10 arranged therein are tapered against the threaded part of the screw. When the screw is tightened the bearing seat of the member 8 will expand and thereby also the inner race ring 6 of the bearing.

The screw 10 is preferably provided with a head 15, which, when the screw is tightened, engages one end surface of the bearing ring 6. When the screw has reached this position further reduction of the bearing play by tightening the screw is impossible, which is a guarantee that preload forces are not applied in the bearing, which should be energy demanding and increase the wear.

In order to make possible an easy mounting and possible dismounting of the different parts of the castor wheel the forked journal is provided with a through hole 16, through which the screw 10 can pass. A cover 17 covers the opening of the hole 16 and acts as a seal and also as a protection against the screw 10 falling out when the castor wheel is dismounted. The castor wheel can therefore be treated as an integrated unit. At a possible dismounting of the screw 10 from the member 8 the screw is pushed axially against the cover 17, which is snapped into a groove in the forked journal, whereby the cover will come loose from its seat. When fitting the cover this is pressed into its seat from the opposite direction.

Other embodiments of the invention than the one described hereabove are of course also possible within the scope of the claims. The forked journal can e.g. be supported in a bearing of any type and possibly also in several bearings. The device can furthermore be modified such that the seat for the outer bearing race ring is provided on the member 8 and the seat for the inner race ring is arranged on the forked journal. The member 8 can be provided with a fixed threaded journal instead of a loose screw 10 or with a threaded bore for cooperation with a screw or a journal on the device provided with the castor wheel. The outer contour of the member 8 is of course given the form which is most suitable for the manner in which the torque is to be applied. It is for instance possible to make projections and/or apertures which make possible cooperation with any desired tool or make possible a turning by hand.

## Claims

1. A castor wheel incorporating a forked journal (3, 4) which is rotatably supported in a bearing on a member (8) intended to be attached to the device provided with the castor wheel, wherein said member (8) has another external surface which is adapted for applying a torque onto the member, and which is provided with a threaded part (11) non-rotatably connected to the member and intended to be screwed onto said device when mounting the castor wheel and wherein said forked journal (3, 4) comprises a hole (16) for passing said threaded part (11) through said member (8), characterized in that said forked journal (3, 4) and said member (8) each are connected with a race ring (5, 6 resp.) of a rolling bearing unit (5, 6, 7) which unit at one end is sealed by means of an annular axial flange (13) of said member (8) which overlaps a portion (12) of the forked journal (3, 4), the outer surface of said flange (13) is provided with said other external surface, said unit at the other end is sealed by means of a cover (17) which covers said hole (16) for retaining the threaded part (11) in the said member (8).

2. A castor wheel according to claim 1, characterized in that the inner race ring (6) of said bearing encloses a portion of said member (8), which member is provided with a through bore (9) suitable to embody a screw (10) the threaded part (11) of which forms said threaded part of the member (8), said screw (10) being prevented from rotation in said bore.

3. A castor wheel according to claim 2, characterized in that the bore (9) and the portion of the screw (10) arranged therein are tapering in a direction against the threaded part (11) of the screw (10).

4. A castor wheel according to any one of the preceding claims, characterized in that the bearing (5, 6, 7) is a complete exchangeable bearing unit.

5. A castor wheel according to any one of the preceding claims, characterized in that the bearing (5, 6, 7) is arranged adjacent a through hole (16) in the forked journal (3, 4), which hole is mainly concentric with said bearing, arranged between the fork arms and being covered by a separate cover (17).

## Revendications

1. Galet pivotant comprenant une chape (3, 4) montée folle par l'intermédiaire d'un roulement sur un élément (8) adapté pour être fixé au dispositif à pourvoir du galet pivotant, cet élément (8) présentant une surface extérieure qui est prévue pour appliquer un couple à l'élément, une partie filetée (11) reliée à l'élément sans pouvoir tourner étant prévue pour être vissée sur le dispositif lors du montage du galet pivotant, la chape (3, 4) comprenant un trou (16) pour faire passer la partie filetée (11) dans l'élément (8), ce galet pivotant étant caractérisé en ce que la chape (3, 4) et l'élément (8) sont reliés chacun à une bague (respectivement 5, 6) d'un roulement (5, 6, 7) dont une extrémité est rendue étanche par un rebord axial annulaire (13) de l'élément (8) qui recouvre un partie (12) de la chape (3, 4), ce rebord (13) présentant une surface extérieure, tandis que l'autre extrémité du roulement (5, 6, 7) est rendue étanche par un couvercle (17) qui recouvre le trou (16) afin de maintenir la partie filetée (11) dans l'élément (8).

2. Galet pivotant suivant la revendication 1, caractérisé en ce que la bague intérieure (6) du roulement entoure une partie de l'élément (8), ce dernier étant percé d'un trou débouchant (9) approprié pour loger une vis (10) dont la partie filetée (11) forme la partie filetée de l'élément (8), la rotation de cette vis (10) dans le trou (9) étant empêchée.

3. Galet pivotant suivant la revendication 2, caractérisé en ce que le trou (9) et la partie de la vis (10) disposée dans ce trou sont en forme de cône dans le sens inverse à la partie filetée (11) de la vis (10).

4. Galet pivotant suivant l'une quelconque des revendications précédentes, caractérisé en ce que le roulement (5, 6, 7) est un roulement totalement interchangeable.

5. Galet pivotant suivant l'une quelconque des revendications précédentes, caractérisé en ce que le roulement (5, 6, 7) est monté au voisinage d'un trou débouchant (16) percé dans la chape (3, 4), ce trou principalement concentrique au roulement étant formé entre les bras de la chape et recouvert par un couvercle distinct (17).

## Patentansprüche

1. Eine Lenkrolle mit einem gegabelten Achsschenkel (3, 4), der drehbar in einem Lager an einem Glied (8) abgestützt ist, welches dazu bestimmt ist, an einem mit der Lenkrolle versehen Gerät angebracht zu werden, wobei das Glied (8) eine weitere Außenfläche hat, die zur Ausübung eines Drehmoments auf das Glied hergerichtet ist, und mit einem Gewindeteil (11) versehen ist, das undrehbar mit dem Glied verbunden und dazu bestimmt ist, an dem Gerät bei der Montage der Lenkrolle angebracht zu werden, und wobei der gegabelte Achsschenkel (3, 4) eine Durchbrechung (16) zum Durchführen des Gewindeteils (11) durch das Glied (8) aufweist, dadurch gekennzeichnet, daß der gegabelte Achsschenkel (3, 4) und das Glied (8) mit je einem Laufring (5 bzw. 6) einer Wälzlagereinheit (5, 6, 7) verbunden sind, die an einem Ende mittels eines ringförmigen Axialflanches (13) des Gliedes (8) abgedichtet ist, das einen Teil (12) des gegabelten Abschnitts (3, 4) überlappt, daß der Außenumfang des Flanches (13) mit der genannten weiteren Außenfläche versehen ist und daß die Einheit an ihrem anderen Ende mittels eines Deckels (17) abgedichtet ist.

2. Eine Lenkrolle nach Anspruch 1, dadurch gekenzeichnet, daß der innere Laufring (6) des Lagers einen Teil des Gliedes (8) umschließt, welches mit einer Durchgangsbohrung (9) zur Aufnahme einer Schraube (10) versehen ist, deren Gewindeteil (11) den Gewindeteil des Gliedes (8) bildet, wobei die Schraube (10) gegen Drehung in der Bohrung gesichert ist.

3. Eine Lenkrolle nach Anspruch 2, dadurch gekennzeichnet, daß die Bohrung (9) und der daring aufgenommende Abschnitt (10) zum Gewindeteil (11) der Schraube (10) hin verjüngt sind.

4. Eine Lenkrolle nach einem der vorhergehenden Ansprüche, dadurch gekennzeichnet, daß das Lager (5, 6, 7) eine vollständige austauschbare Lagereinheit ist.

5. Eine Lenkrolle nach einem der vorhergehenden Ansprüche, dadurch gekennzeichnet, daß das Lager (5, 6, 7) einer Durchbrechung (16) im gegabelten Achsschenkel (3, 4) benachbart angeordnet ist, welche in der Hauptsache konzentrisch zum Lager zwischen den Gabelarmen angeordnet und durch einen getrennten Deckel (17) abgedeckt ist.